# EUROPÄISCHE PATENTSCHRIFT

(11) **EP 1 744 070 B1**
(45) Veröffentlichungstag und Bekanntmachung des Hinweises auf die Patenterteilung: **18.06.2014**
(21) Anmeldenummer: 06014197.5
(22) Anmeldetag: 08.07.2006
(51) Int. Cl.: F16C 19/30, F16C 33/58

(54) **Axiallager**
Thrust bearing
Palier de butée

(30) Priorität: 12.07.2005 US 698425 P
(43) Veröffentlichungstag der Anmeldung: 17.01.2007
(73) Patentinhaber: Schaeffler Technologies GmbH & Co. KG, 91074 Herzogenaurach (DE)
(72) Erfinder: Brown, James Kevin, Rock Hill SC 29730 (US); Clark, Eric, Rock Hill SC 29732 (US)

(56) Entgegenhaltungen:
- DE-A1- 4 040 414
- DE-A1- 4 122 679
- GB-A- 2 071 228
- US-A- 4 907 899
- US-A1- 2003 190 106

## Beschreibung

### Gebiet der Erfindung

Die Erfindung betrifft ein Axiallager gemäß den Merkmalen des Oberbegriffs des Patentanspruchs 1.

### Hintergrund der Erfindung

Axiallager finden seit langem vielseitig Anwendung und dienen im Wesentlichen der Aufnahme von axialen Belastungen. Entsprechend dem jeweiligen Anwendungsfall sind verschiedene Ausgestaltungsvarianten bekannt, wobei überwiegend darauf abgestellt wird, einen möglichst geringen Bauraum zu beanspruchen sowie dieselben möglichst kompakt und vorzugsweise als geschlossene Baueinheit auszubilden. Insofern wird beispielgebend auf die Druckschriften US 2 891 828, US 4 981 373, DE 36 43 584 A1, DE 38 40 957 A1 und DE 39 14 175 A1 verwiesen.

Axiallager finden auch in an sich bekannten Automatikgetrieben an Kraftfahrzeugen Anwendung, beispielsweise zur axialen Abstützung des Sonnenrades an einem Planetenträger eines Planetengetriebes. In der Praxis hat sich jedoch gezeigt, dass bei herkömmlich verwendeten Standardlagern, wie sie beispielsweise durch die oben genannten Druckschriften offenbart sind, Schmiermittel radial durch das Axiallager hindurch abfließen kann und für den eigentlichen Zweck, nämlich einer definierten axialen Zufuhr zum Differentialgetriebe des Kraftfahrzeugs, in nachteiliger Weise nicht mehr oder nur in zu geringer Menge zur Verfügung steht.

Außerdem ist aus der DE 40 40 414 A1 ein Axiallager bekannt, bei dem eine im Durchmesser größere Laufscheibe mit ihrem sich axial erstreckenden Hülsenabschnitt einen ebensolchen Hülsenabschnitt einer im Durchmesser kleinere Laufscheibe radial und axial übergreift. Im Übergreifungsbereich weisen die Laufscheiben an ihren jeweiligen Hülsenabschnitten zueinander gerichtete Nasen bzw. Eindrückungen auf, welche die beiden Laufscheiben zusammenhalten. Benachbart zu diesen Nasen bzw. Eindrückungen sind in Umfangsrichtung liegende Keilflächen ausgebildet, die mit einer radial gegenüber angeordneten Führungsfläche einen keilförmigen hydrodynamischen Schmierspalt bilden, durch den gewollt Schmiermittel austreten kann.

Überdies sind aus der DE 31 07 086 A1 (GB 2 071 228 A1) und der DE 40 06 197 A1 (US 4 907 899 A1) Axiallager bekannt, bei denen auf eine im Durchmesser größere Laufscheibe bzw. eine im Durchmesser kleinere Laufscheibe ein Halteband fest aufgeschoben ist, mittels dessen radial nach außen bzw. radial nach innen weisenden Vorsprünge oder Kanten die jeweilige Laufscheibe das Axiallager fixierend an einem benachbarten Bauteil (Gehäuse oder Welle) festlegbar ist. Auch diese Axiallager weisen aufgrund ihrer Konstruktion einen Spalt zwischen den beiden Laufscheiben auf, durch den ein deutlicher Schmiermittelverlust auftreten kann.

Ferner wurde erkannt, dass während des Betriebes eines Automatikgetriebes in Planetengetriebebauweise eine Axiallast an das Sonnenrad des Planetengetriebes generiert wird, durch die sich dieses Sonnenrad gegebenenfalls axial vom Axiallager wegbewegen kann. Dieser Zustand ist zwar nur beim Fahren in Vorwärtsgängen zu verzeichnen (beim Fahren im Leerlauf oder im Rückwärtsgang entsteht Schub in der umgekehrten Richtung), jedoch kann auch aufgrund dieses Umstandes Schmiermittel durch sich ausbildende Freiräume zwischen dem Axiallager und den korrespondierenden Stützflächen hindurch undefiniert radial abfließen. Hier setzt die nachfolgend beschriebene Erfindung an.

### Aufgabe der Erfindung

Der Erfindung liegt die Aufgabe zugrunde, ein Axiallager zur Übertragung von Axialkräften zwischen zumindest zwei relativ zueinander drehenden Getriebeteilen einer Getriebeanordnung zu schaffen, welches weitestgehend einen radialen Abfluss von Schmiermittel verhindert und demgemäß eine hinreichende axiale Versorgung an anderen Stellen der Getriebeanordnung mit Schmiermittel gewährleistet.

### Zusammenfassung der Erfindung

Gemäß den Merkmalen des Anspruchs 1 betrifft die Erfindung ein Axiallager zur Übertragung von Axialkräften zwischen zumindest zwei relativ zueinander drehenden Getriebeteilen einer Getriebeanordnung, mit zwei koaxial gegenüberliegend angeordneten und einen Käfig mit einer Mehrzahl von Wälzkörpern mit radialem Spiel aufnehmenden Laufscheiben, bei dem eine Laufscheibe einen geringeren Außendurchmesser als die andere Laufscheibe aufweist, bei dem beide Laufscheiben radial außen jeweils einen axial ausgerichteten Außenkragen aufweisen, wobei der Außenkragen der im Außendurchmesser kleiner ausgebildeten Laufscheibe vom Außenkragen der im Durchmesser größer ausgebildeten Laufscheibe axial überdeckt ist, so dass eine weitgehende Kapselung des Axiallagers gegen einen Schmiermitteldurchtritt gewährleistet ist.

Zu Lösung der gestellten Aufgabe ist bei diesem Axiallager außerdem vorgesehen, dass der Außenkragen der im Außendurchmesser größer ausgebildeten Laufscheibe zumindest abschnittsweise einen oder mehrere radial nach innen abgebogene Vorsprünge aufweist, die einen Formschluss der im Außendurchmesser größer ausgebildeten Laufscheibe mit der im Außendurchmesser kleiner ausgebildeten Laufscheibe durch Überschnappen respektive Übergreifen gestatten, und dass die Laufscheiben radial innen jeweils einen über den Innenumfang durchgängig ausgebildeten und axial nach außen abgestellten Innenkragen aufweisen, und jeder Innenkragen derart in eine ringförmige Aussparung oder Nut eines benachbarten Getriebeteiles der Getriebeanordnung radial eindringt, dass zum einen in Grenzen eine Relativbewegung in axialer Richtung zwischen dem Axiallager und zumindest einem benachbarten Getriebeteil möglich ist, und zum anderen ein radialer Schmiermitteldurchtritt zwischen dem zumindest einem benachbarten Getriebeteil und der Außenfläche der zu diesem korrespondierenden Laufscheibe weitgehend verhindert ist.

Durch diese Konstruktion ist sozusagen eine einfache Labyrinthdichtung geschaffen, die ihrerseits einen Abfluss von Schmiermittel zwischen dem zumindest einem zum Axiallager benachbarten Getriebeteil und der korrespondierenden Laufscheibe wirkungsvoll behindert oder gar verhindert.

Ferner ist es zweckmäßig, dass Maß der axialen Erstreckung der Innenkragen verschieden zu wählen, wodurch eine fehlerfreie Montage des Axiallagers wirkungsvoll unterstützt wird.

Schließlich wird vorgeschlagen, dass das zumindest eine benachbarte Getriebeteil ein End-Antriebssonnenrad eines Planetengetriebes ist, welches sich über das beschriebene Axiallager axial an einem Getriebeteil in Form eines Planetenträgers bzw. eines als Planetenträger ausgebildeten Differentialgetriebegehäuses abstützt, wobei der axial nach außen abgestellte Innenkragen der einen Laufscheibe des Axiallagers in eine ringförmige Aussparung oder Nut des End-Sonnenrades fasst, und der axial nach außen abgestellte Innenkragen der anderen Laufscheibe in eine ringförmige Aussparung oder Nut eines Planetenträgers bzw. Differentialgetriebegehäuses oder eines Kegelrades des Differentialgetriebes eingreift.

### Kurze Beschreibung der Zeichnungen

Die Erfindung wird im Folgenden anhand der beiliegenden Zeichnung an einigen Ausführungsformen näher erläutert. Darin zeigt
Fig. 1 eine Getriebeanordnung eines Automatikgetriebes mit einem herkömmlich verwendeten Axiallager (Stand der Technik),
Fig. 2 die Einzelheit "Z" nach Fig. 1 in vergrößerter Darstellung,
Fig. 3 ein erfindungsgemäß ausgebildetes Axiallager im eingebauten Zustand,
Fig. 4 die Einzelansicht des Axiallagers nach Fig. 3 (Ansicht "A"), und
Fig. 5 einen Schnitt I-I durch das Axiallager gemäß Fig. 4.

### Detaillierte Beschreibung der Zeichnungen

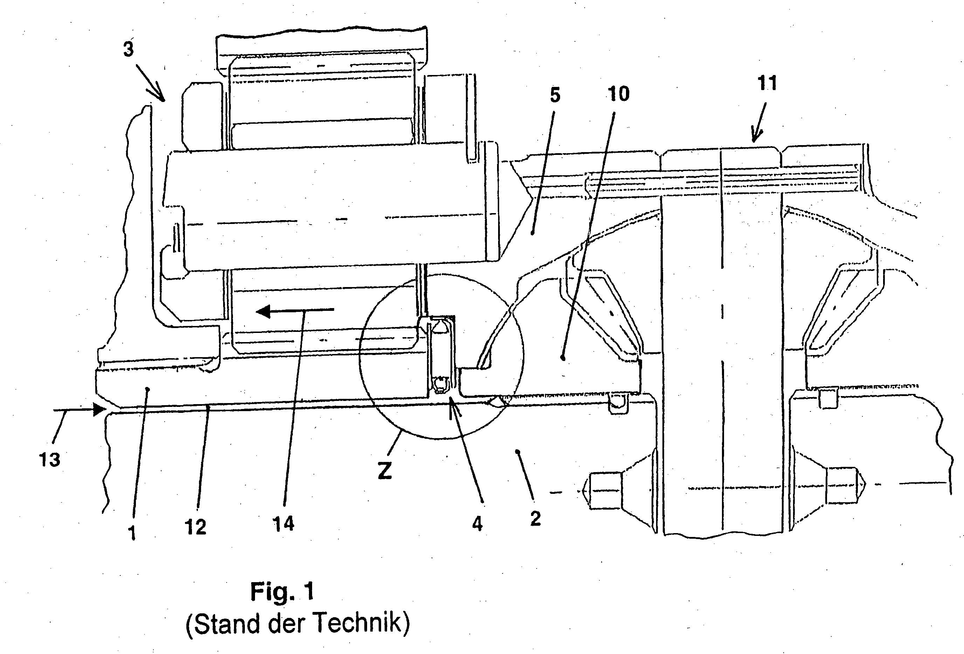

Fig. 1 zeigt einen Längsschnitt eines ausgewählten Abschnittes einer an sich bekannten Getriebeanordnung an einem Kraftfahrzeug in Form eines Automatikgetriebes. Bei dieser Getriebeanordnung stützt sich ein erstes Getriebeteil 1 in Form eines eine Welle 2 umschließenden End-Antriebssonnenrades eines Planetengetriebes 3 über ein Axiallager 4 axial an einem zweiten Getriebeteil 5 in Form eines Planetenträgers bzw. eines einen Planetenträger haltenden Gehäuses eines Differentialgetriebes 11 ab.

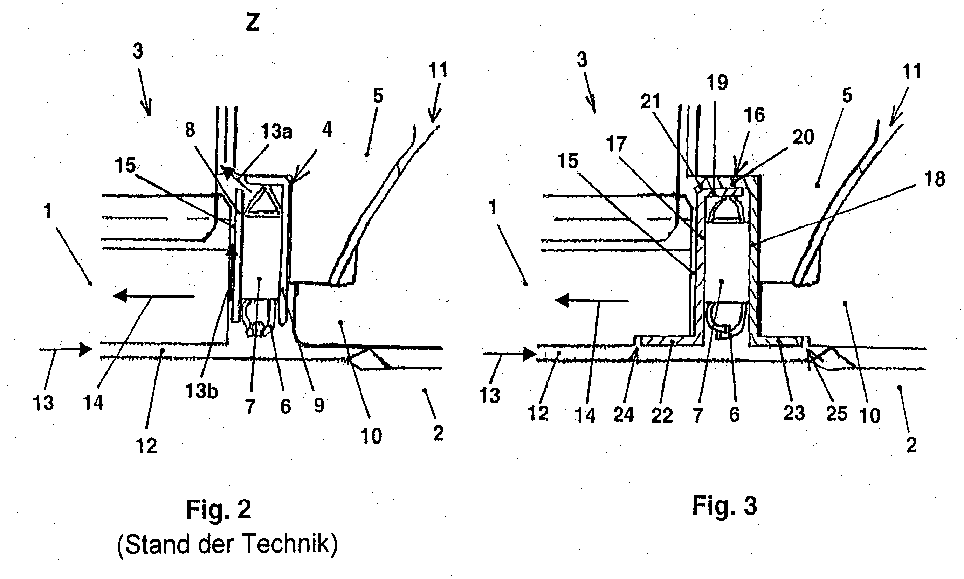

Das Axiallager 4 besteht im Wesentlichen aus zwei koaxial gegenüberliegend angeordneten und einen Käfig 6 mit einer Mehrzahl von Wälzkörpern 7 unter radialem Spiel aufnehmenden Laufscheiben 8 und 9 (Fig. 2). Axial benachbart zum Axiallager 4 ist ein Getriebeteil 10 in Form eines Kegelrades des Differentialgetriebes 11 angeordnet.

In einem zwischen der Welle 2 und dem ersten Getriebeteil 1 (End-Antriebssonnenrad) gebildeten Schmiermittelkanal 12 wird in Richtung des Pfeils 13 Schmiermittel axial dem Differentialgetriebe 11 zugeführt. Wie bereits einleitend ausgeführt wurde, hat sich in der Praxis gezeigt, dass bei herkömmlich verwendeten und weitestgehend offenen Standard-Axiallagern ein Schmiermittelanteil entsprechend dem Pfeil 13a (Fig. 2) durch das Axiallager 4 hindurch radial abfließen kann und für den eigentlichen Zweck, nämlich der definierten axialen Zufuhr zum Differentialgetriebe 11, in nachteiliger Weise nicht mehr zur Verfügung steht.

Ferner wurde erkannt, dass während des Betriebes des Automatikgetriebes eine Axiallast an das End-Antriebssonnenrad 1 des Planetengetriebes 3 generiert wird, durch die sich dieses Sonnenrad gegebenenfalls vom Axiallager 4 in Richtung des Pfeils 14 axial trennen kann. Dieser Zustand ist zwar nur beim Fahren in Vorwärtsgängen zu verzeichnen, während beim Fahren im Leerlauf oder im Rückwärtsgang ein Schub in der umgekehrten Richtung entsteht, jedoch kann auch aufgrund dieses Umstandes Schmiermittel durch sich ausbildende Freiräume 15 radial zwischen dem Axiallager 4 und den korrespondierenden Stützflächen des End-Antriebssonnenrades 1 hindurch entsprechend dem Pfeil 13b abfließen (Fig. 2).

Um diesem Problem nunmehr wirkungsvoll begegnen, wird gemäß den Fig. 3 bis 5 ein verbessertes Axiallager 16 vorgeschlagen, welches das herkömmliche Axiallager 4 ersetzen soll. Dieses Axiallager 16 unterscheidet sich vom bekannten Axiallager 4 zunächst dahingehend, dass eine Laufscheibe 17 einen geringeren Außendurchmesser als die andere Laufscheibe 18 aufweist, und dass beide Laufscheiben 17, 18 radial außen jeweils einen axial nach innen abgestellten Außenkragen 19 bzw. 20 aufweisen.

Der Außenkragen 19 der im Außendurchmesser kleiner ausgebildeten und in der Fig. 3 links angeordneten Laufscheibe 17 ist nunmehr derart vom Außenkragen 20 der im Außendurchmesser größer ausgebildeten Laufscheibe 18 axial überdeckt, dass eine weitgehende Kapselung des Axiallagers 16 gegen einen radialen Schmiermitteldurchtritt (Pfeil 13a gemäß Fig. 2) durch dasselbe hindurch gewährleistet ist. Ein in Fig. 2 dargestellter Schmiermittelabfluss 13a ist nunmehr wirkungsvoll blockiert.

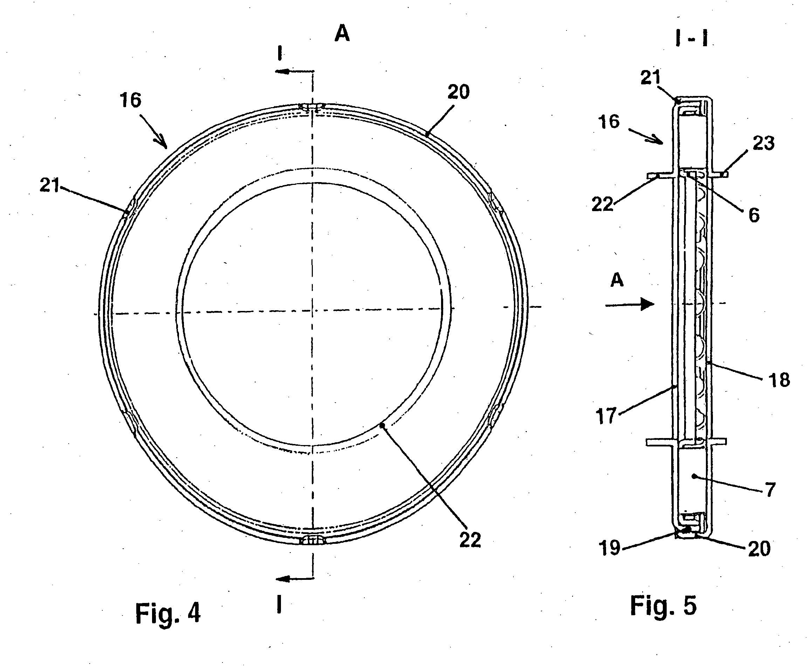

Der Außenkragen 20 der im Außendurchmesser größer ausgebildeten Laufscheibe 18 weist zumindest abschnittsweise einen oder mehrere, vorliegend sechs gleichmäßig über den Umfang verteilte sowie radial nach innen abgebogene oder abzubiegende Vorsprünge 21 auf, die ihrerseits einen Formschluss zwischen den Laufscheiben 17, 18 durch Überschnappen respektive Übergreifen während der Komplettierung des Axiallagers 4 zu einer kompakten, weitestgehend geschlossenen Baueinheit gestatten (Fig. 4 und Fig. 5).

Wie den Figuren 3 bis 5 weiter zu entnehmen ist, sind die Laufscheiben 17, 18 radial innen mit jeweils einem über den Innenumfang durchgängig ausgebildeten und nach außen abgestellten Innenkragen 22 bzw. 23 ausgestattet, welche ihrerseits jeweils in eine ringförmige Aussparung 24, 25 eines benachbarten Getriebeteiles 1 bzw. 10 eingreifen.

Gemäß dem vorliegenden Ausführungsbeispiel greift der Innenkragen 22 der im Außendurchmesser kleiner ausgebildeten Laufscheibe 17 in die Aussparung 24 des End-Antriebssonnenrades 1 und der Innenkragen 23 der im Außendurchmesser größer ausgebildeten Laufscheibe 18 in die Aussparung 25 des benachbarten Getriebeteiles 10 in Form eines Kegelrades oder des Gehäuses des Differentialgetriebes 11 ein.

Hierdurch ist sozusagen eine Labyrinthdichtung geschaffen, die ihrerseits insbesondere beim Fahren in Vorwärtsgängen einen radialen Durchtritt von Schmiermittel durch einen sich ausbildenden Freiraum 15, wie es bei herkömmlichen Axiallagern 4 gemäß Fig. 2 auftreten kann, weitgehend verhindert.

Denkbar ist es jedoch auch und wird durch die Erfindung mit erfasst, statt der beschriebenen ringförmigen Aussparung 24 bzw. 25 eine Ringnut für angepasst ausgebildete Innenkragen vorzusehen, die ihrerseits die Labyrinthdichtung in ihrer Wirkung weiter verbessert (nicht näher dargestellt).

Gesetzt den Fall, dass sich auch das Axiallager 16 nach links verschiebt und sich vom abstützenden Planetenträger 5 axial trennt, ist auch hier ein unerwünschter Durchtritt von Schmiermittel verhindert, zumindest jedoch wirkungsvoll behindert, da durch den Innenkragen 23 der Laufscheibe 18 in Verbindung mit der ringförmigen Aussparung 25 im Getriebeteil 10 (Kegelrad bzw. Differentialgetriebegehäuse) ebenfalls eine Labyrinthdichtung ausgebildet ist (nicht näher dargestellt).

Im Ergebnis ist eine Blockade bzw. eine Begrenzung des Abflusses von Schmiermittel durch das Axiallager 16 und sich ausbildende Freiräume 15 gewährleistet. Folglich fließt, wie gewünscht, der Großteil des Schmiermittels zwangsweise axial zum Differentialgetriebe 11 und gestattet dort eine ausreichende Schmierung desselben.

Die Figuren 3 und 5 zeigen verschieden lang ausgebildete Innenkragen 22, 23 der Laufscheiben 17, 18, die sich hinsichtlich einer fehlerfreien Montage des Axiallagers 16 bewährt haben.

### Bezugszeichen

- 1: Getriebeteil (End-Antriebssonnenrad)
- 2: Welle
- 3: Planetengetriebe
- 4: Axiallager
- 5: Getriebeteil, Planetenträger, Differentialgetriebegehäuse
- 6: Käfig
- 7: Wälzkörper
- 8: Laufscheibe
- 9: Laufscheibe
- 10: Getriebeteil, Kegelrad
- 11: Differentialgetriebe
- 12: Schmiermittelkanal
- 13: Richtungspfeil (Schmiermittelzuführung)
- 13a: Undefiniert abfließender Schmiermittelanteil
- 13b: Undefiniert abfließender Schmiermittelanteil
- 14: Richtungspfeil einer etwaigen Axialbewegung des Getriebeteils 1 beim Fahren in Vorwärtsgängen
- 15: Freiraum
- 16: Axiallager
- 17: Laufscheibe
- 18: Laufscheibe
- 19: Außenkragen
- 20: Außenkragen
- 21: Vorsprung
- 22: Innenkragen
- 23: Innenkragen
- 24: Aussparung
- 25: Aussparung

## Patentansprüche

1. Axiallager (16) zur Übertragung von Axialkräften zwischen zumindest zwei relativ zueinander drehenden Getriebeteilen (1, 5) einer Getriebeanordnung, mit zwei koaxial gegenüberliegend angeordneten und einen Käfig (6) mit einer Mehrzahl von Wälzkörpern (7) mit radialem Spiel aufnehmenden Laufscheiben (17, 18), bei dem eine Laufscheibe (17) einen geringeren Außendurchmesser als die andere Laufscheibe (18) aufweist, bei dem beide Laufscheiben (17, 18) radial außen jeweils einen axial ausgerichteten Außenkragen (19, 20) aufweisen, wobei der Außenkragen (19) der im Außendurchmesser kleiner ausgebildeten Laufscheibe (17) vom Außenkragen (20) der im Durchmesser größer ausgebildeten Laufscheibe (18) axial überdeckt ist, so dass eine weitgehende Kapselung des Axiallagers (16) gegen einen Schmiermitteldurchtritt gewährleistet ist, **dadurch gekennzeichnet, dass** der Außenkragen (20) der im Außendurchmesser größer ausgebildeten Laufscheibe (18) zumindest abschnittsweise einen oder mehrere radial nach innen abgebogene Vorsprünge (21) aufweist, die einen Formschluss der im Außendurchmesser größer ausgebildeten Laufscheibe (18) mit der im Außendurchmesser kleiner ausgebildeten Laufscheibe (17) durch Überschnappen respektive Übergreifen gestatten, und dass die Laufscheiben (17, 18) radial innen jeweils einen über den Innenumfang durchgängig ausgebildeten und axial nach außen abgestellten Innenkragen (22, 23) aufweisen, und jeder Innenkragen (22, 23) derart in eine ringförmige Aussparung (24, 25) oder Nut eines benachbarten Getriebeteiles (1, 10) der Getriebeanordnung radial eindringt, dass zum einen in Grenzen eine Relativbewegung in axialer Richtung zwischen dem Axiallager (16) und zumindest einem benachbarten Getriebeteil (1) möglich ist, und zum anderen ein radialer Schmiermitteldurchtritt zwischen dem zumindest einem benachbarten Getriebeteil (1) und der Außenfläche der zu diesem korrespondierenden Laufscheibe (17) weitgehend verhindert ist.

2. Axiallager nach Anspruch 1, **dadurch gekennzeichnet, dass** das Maß der axialen Erstreckung der Innenkragen (22, 23) verschieden ist.

3. Axiallager an einem Automatikgetriebe eines Kraftfahrzeugs nach Anspruch 1 oder 2, **dadurch gekennzeichnet, dass** das zumindest eine benachbarte Getriebeteil (1) ein End-Antriebssonnenrad eines Planetengetriebes (3) ist, welches sich über das Axiallager (16) axial an einem Getriebeteil (5) in Form eines Planetenträgers abstützt, wobei der axial nach außen abgestellte Innenkragen (22) der einen Laufscheibe (17) des Axiallagers (16) in eine ringförmige Aussparung (24) oder Nut des End-Sonnenrades eingreift, und der axial nach außen abgestellte Innenkragen (23) der anderen Laufscheibe (18) in eine ringförmige Aussparung (25) oder Nut eines weiteren benachbarten Getriebeteiles (10) in Form eines Kegelrades oder Gehäuses eines Differentialgetriebes (11) eingreift.

## Claims

1. Axial bearing (16) for transmitting axial forces between at least two gear mechanism parts (1, 5) of a gear mechanism arrangement, which gear mechanism parts (1, 5) rotate relative to one another, having two races (17, 18) which are arranged so as to lie coaxially opposite one another and receive a cage (6) with a plurality of rolling bodies (7) with a radial play, in which axial bearing (16) one race (17) has a smaller external diameter than the other race (18), in which axial bearing (16) both races (17, 18) in each case have an axially oriented outer collar (19, 20) radially on the outside, the outer collar (19) of the race (17) which is configured with the smaller external diameter being covered axially by the outer collar (20) of the race (18) which is configured with the larger diameter, with the result that extensive encapsulation of the axial bearing (16) against a passage of lubricant is ensured, **characterized in that** the outer collar (20) of the race (18) which is configured with the larger external diameter has, at least in sections, one or more radially inwardly bent-away projections (21) which permit a positively locking connection of the race (18) which is configured with the larger external diameter to the race (17) which is configured with the smaller external diameter by way of snapping over it or engaging over it, and **in that** the races (17, 18) in each case have, radially on the inside, an inner collar (22, 23) which is of continuous configuration over the internal circumference and is set apart axially to the outside, and each inner collar (22, 23) penetrates radially into an annular cut-out (24, 25) or groove of an adjacent gear mechanism part (1, 10) of the gear mechanism arrangement in such a way that firstly a relative movement is possible within limits in the axial direction between the axial bearing (16) and at least one adjacent gear mechanism part (1), and secondly a radial passage of lubricant is largely prevented between the at least one adjacent gear mechanism part (1) and the outer face of the race (17) which corresponds therewith.

2. Axial bearing according to Claim 1, **characterized in that** the magnitude of the axial extent of the inner collars (22, 23) is different.

3. Axial bearing on an automatic transmission of a motor vehicle according to Claim 1 or 2, **characterized in that** the at least one adjacent gear mechanism part (1) is a final drive sun gear of a planetary gear mechanism (3), which final drive sun gear is supported axially via the axial bearing (16) on a gear mechanism part (5) in the form of a planetary carrier, that inner collar (22) of the one race (17) of the axial bearing (16) which is set away axially to the outside engaging into an annular cut-out (24) or groove of the final sun gear, and that inner collar (23) of the other race (18) which is set away axially to the outside engaging into an annular cut-out (25) or groove of a further adjacent gear mechanism part (10) in the form of a bevel gear or housing of a differential gear mechanism (11).

## Revendications

1. Roulement axial (16) pour la transmission de forces axiales entre au moins deux parties d'engrenage (1, 5) en rotation l'une par rapport à l'autre d'un arrangement d'engrenage, comprenant deux disques de roulement (17, 18) disposés de manière coaxiale en opposition l'un à l'autre et accueillant une cage (6) avec une pluralité d'éléments de roulement (7) avec un jeu radial, avec lequel un disque de roulement (17) présente un diamètre extérieur plus petit que celui de l'autre disque de roulement (18), avec lequel les deux disques de roulement (17, 18) présentent à chaque fois, dans le sens radial à l'extérieur, un collet extérieur (19, 20) orienté dans le sens axial, le collet extérieur (19) du disque de roulement (17) configuré avec le plus petit diamètre extérieur étant recouvert dans le sens axial par le collet extérieur (20) du disque de roulement (18) configuré avec le plus grand diamètre, ce qui garantit un encapsulage étendu du roulement axial (16) contre un passage de lubrifiant, **caractérisé en ce que** le collet extérieur (20) du disque de roulement (18) configuré avec le plus grand diamètre extérieur présente au moins dans certaines portions une ou plusieurs parties en saillie (21) recourbées dans le sens radial vers l'intérieur, lesquelles permettent un engagement géométrique du disque de roulement (18) configuré avec le plus grand diamètre extérieur avec le disque de roulement (17) configuré avec le plus petit diamètre extérieur par emboîtement ou chevauchement, et **en ce que** les disques de roulement (17, 18) présentent à chaque fois, dans le sens radial à l'intérieur, un collet intérieur (22, 23) réalisé en continu sur le pourtour intérieur et détaché dans le sens axial vers l'extérieur, et chaque collet intérieur (22, 23) pénètre dans le sens radial dans un évidement de forme annulaire (24, 25) ou une rainure d'une partie d'engrenage voisine (1, 10) de l'arrangement d'engrenage de telle sorte que d'une part, un mouvement relatif soit possible dans certaines limites dans le sens axial entre le roulement axial (16) et au moins une partie d'engrenage (1) voisine, et d'autre part un passage de lubrifiant dans le sens radial entre l'au moins une partie d'engrenage (1) voisine et la surface extérieure du disque de roulement (17) correspondant à celle-ci soit largement empêché.

2. Roulement axial selon la revendication 1, **caractérisé en ce que** les cotes de projection axiale des collets intérieurs (22, 23) sont différentes.

3. Roulement axial sur une boite de vitesses automatique d'un véhicule automobile selon la revendication 1 ou 2, **caractérisé en ce que** l'au moins une partie d'engrenage (1) voisine est une roue solaire d'entraînement finale d'un engrenage planétaire (3), laquelle s'appuie par le biais du roulement axial (16) dans le sens axial sur une partie d'engrenage (5) sous la forme d'un porte-satellites, le collet intérieur (22) détaché dans le sens axial vers l'extérieur de l'un des disques de roulement (17) du roulement axial (16) venant en prise dans un évidement de forme annulaire (24) ou une rainure de la roue solaire finale et le collet intérieur (23) détaché dans le sens axial vers l'extérieur de l'autre disque de roulement (18) venant en prise dans un évidement de forme annulaire (25) ou une rainure d'une partie d'engrenage voisine supplémentaire (10) sous la forme d'un pignon conique ou d'un carter d'un engrenage différentiel (11).
